# EUROPEAN PATENT SPECIFICATION

(11) **EP 4 026 423 B1**
(45) Date of publication and mention of the grant of the patent: **21.06.2023**
(21) Application number: 21150689.4
(22) Date of filing: 08.01.2021
(51) Int. Cl.: G05G 1/445, G05G 1/01, F16K 3/04, A01G 25/00, E03C 1/05

(54) **WATERING DEVICE**
BEWÄSSERUNGSVORRICHTUNG
DISPOSITIF D'ARROSAGE

(43) Date of publication of application: 13.07.2022
(73) Proprietor: HUSQVARNA AB, 561 82 Huskvarna (SE)
(72) Inventor: Renner, Thomas, 89079 Ulm (DE)
(74) Representative: Finkele, Rolf

(56) References cited:
- WO-A1-2020/180992
- JP-A- S57 184 783
- KR-B1- 101 027 431

## Description

### TECHNICAL FIELD

The present disclosure relates to a watering device.

### BACKGROUND

Typically, a water supply system is installed in a factory, a bathroom, a wash basin, a drinking fountain, a shower stall, a garden, and the like. Such water supply system may include a foot valve system for operation or control applications thereof such as to supply water. Conventional foot valve system includes a number of complex components, such as a housing, a foot pedal, a valve assembly, a diverter element, and the like. Further, opening and closing of the valve assembly is performed by the foot pedal. However, the foot pedal is often reset via an integrated spring mechanism or a Bowden cable, which is not desirable. Thus, there is a need for an improved watering device for water supply system which includes a simple design and eliminates the complex components.

An example of a foot valve system is provided in W.O. Patent Application Number 2,013,058,581 (hereinafter referred to as '581 reference). The foot valve system includes a frame, a housing member, a base member, a valve unit, a control member, and a pedal. The pedal is supported by the frame. When a user operates the pedal, a pedal operation force transmission unit of the pedal allows transfer of the operating force into rotation of a control member, and intermittently, the rotation of an intermittent member. This rotation of the intermittent member leads to change in opening and closing projection such that an inlet and an outlet of a base member and a continuous groove of the intermittent member are communicated with each other. The '581 reference discloses the foot valve system which may operate the valve unit using the control member which is rotatably installed on the base member by employing the operating force in accordance with the rotation of the pedal. Further, the pedal includes an elastic member for elastically biasing a link member of the pedal. The elastic member may be preferably formed of a coil spring that generates an elastic force to restore the pedal, based on operation of the pedal by the user. However, the foot valve system of '581 reference includes multiple parts that are complex in design and assembly. Further, the multiple parts such as the elastic member (i.e., the coil spring) may lead to susceptibility to breakdowns, service overheads and other implementation constrains for common users. The foot valve system may also suffer disadvantages of different arrangements, mechanisms which are employed in order to covert the operating force from the pedal to rotational force. Moreover, the foot valve system seems short of providing different installation arrangements, and multiple modes of operation thereof.

WO 2020/180992 A1 discloses a watering device.

### SUMMARY

In view of the above, it is an objective of the present disclosure to solve or at least reduce the drawbacks discussed above. The objective is at least partially achieved by a watering device. The watering device includes a watering controller having a controller inlet and a controller outlet. The watering controller is actuated by a user action. The watering controller includes a first portion to activate the watering controller, and a second portion to deactivate the watering controller and acting on the first portion. The first portion is a foot pedal. The watering device also includes a housing having a housing inlet and one or more housing outlets. The housing inlet and the one or more housing outlets are fluidly coupled to define a water channel. The watering device is characterized in that the second portion is a foot pedal. The controller outlet defines an opening. The opening allows flow of water from the controller inlet to exit through the controller outlet. Further, the water channel defines a nose portion. The nose portion selectively engages with the opening on assembly of the housing inlet of the housing with the controller outlet of the watering controller. A first user action with the watering controller at least partially disengages the opening of the watering controller from the nose portion of the housing such that to allow the water to flow from the watering controller to the one or more housing outlets.

Thus, the present disclosure provides an improved watering device to supply water effectively and efficiently. The improved design of the watering device includes fewer components having simple construction. The first portion and the second portion of the watering controller obviate need of any elastic or biasing means such as springs to restore the watering device, based on presence of any user action (herein, the first user action). Further, due to fewer components, the watering device is less expensive, and easy to maintain as well as use for common users. The watering device includes two components i.e., the watering controller and the housing, which allows easy assembly and different installation options of watering device.

According to an embodiment of the present disclosure, a second user action with the watering controller engages the opening of the watering controller from the nose portion of the housing such that to disallow the water to flow from the watering controller to the one or more housing outlets. This arrangement of the watering device may prohibit the wastage of water based on the second user action with the watering controller.

According to an embodiment of the present disclosure, the watering controller has a rocker arm shape having the first portion and the second portion. The first user action acts on the first portion and the second user action acts on the second portion. This arrangement of the watering device allows user to operate the watering device by a foot when the watering device is placed horizontally such as on a ground surface. Further, the watering device allows user to operate the watering device by a hand when the watering device is hanged vertically such as on a wall, or a tree.

According to an embodiment of the present disclosure, the one or more housing outlets include attachments which include one or more of a sprinkler, and a sprayer. The different attachments of the housing outlets may be used in variety of applications, such as to suit different watering profiles, and the like.

According to an embodiment of the present disclosure, the controller inlet is attached with a hose connector or a water source. The hose connector or the water source are provided to supply continues water to the watering device.

According to an embodiment of the present disclosure, assembly of the housing inlet of the housing with the controller outlet of the watering controller includes one or more sealings between the housing inlet and the controller outlet. The sealings may be generally used to seal the housing inlet and the controller outlet.

According to an embodiment of the present disclosure, the housing inlet and the controller outlet are assembled by a snap-fit connection or a screw joint. The snap-fit or screw joint connection allows easy and quick assembly of the housing inlet and the controller outlet.

According to an embodiment of the present disclosure, the watering device is installed on one or more of a ground surface, a wall, and a tree. Such different installation arrangements provide flexibility of use of the watering device for different applications.

According to an embodiment of the present disclosure, one or more of the first user action and the second user action to actuate the watering controller may include one or more of actuation by a user hand, and a user foot. This arrangement provides improved ergonomics and options of actuation by the user hand or the user foot during operation.

According to an embodiment of the present disclosure, the first portion and the second portion are in different planes. This arrangement of the first portion and the second portion provides ease of access and actuation of the watering controller for different installations or applications of the watering device.

Other features and aspects of this disclosure will be apparent from the following description and the accompanying drawings.

### BRIEF DESCRIPTION OF THE DRAWINGS

The disclosure will be described in more detail with reference to the enclosed drawings, wherein:
**FIG. 1A** illustrates a perspective view of a watering device having a watering controller in a first position, in accordance with the present disclosure;
**FIG. 1B** illustrates a perspective view of the watering device having a watering controller in a second position, in accordance with the present disclosure;
**FIG. 2** illustrates an exploded view of the watering device, in accordance with the present disclosure;
**FIG. 3** illustrates a cross-sectional view of the blind cleaner device about a vertical plane, in accordance with the present disclosure;
**FIG. 4A** illustrates a perspective view of a watering controller, in accordance with the present disclosure;
**FIG. 4B** illustrates a cross-sectional view of the watering controller, in accordance with the present disclosure;
**FIG. 5** illustrates a bottom view of the watering device, in accordance with the present disclosure;
**FIG. 6A** illustrates a perspective view of a housing, in accordance with the present disclosure;
**FIG. 6B** illustrates a cross-sectional view of the housing, in accordance with the present disclosure;
**FIG. 7A** illustrates a partial cross-sectional view of the housing about a vertical plane when the watering controller is in second position, in accordance with the present disclosure;
**FIG. 7B** illustrates a cross-sectional view of the housing about another vertical plane when the watering controller is in second position, in accordance with the present disclosure;
**FIG. 7C** illustrates a partial cross-sectional view of the housing about a vertical plane when the watering controller is in first position, in accordance with the present disclosure; and
**FIG. 7D** illustrates a cross-sectional view of the housing about another vertical plane when the watering controller is in first position, in accordance with the present disclosure.

### DESCRIPTION OF EMBODIMENTS

The present disclosure will be described more fully hereinafter with reference to the accompanying drawings, in which example embodiments of the disclosure incorporating one or more aspects of the present disclosure are shown. This disclosure may, however, be embodied in many different forms and should not be construed as limited to the embodiments set forth herein; rather, these embodiments are provided so that this disclosure will be thorough and complete, and will fully convey the scope of the disclosure to those skilled in the art. For example, one or more aspects of the present disclosure may be utilized in other embodiments and even other types of structures and/or methods. In the drawings, like numbers refer to like elements.

Certain terminology is used herein for convenience only and is not to be taken as a limitation on the disclosure. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

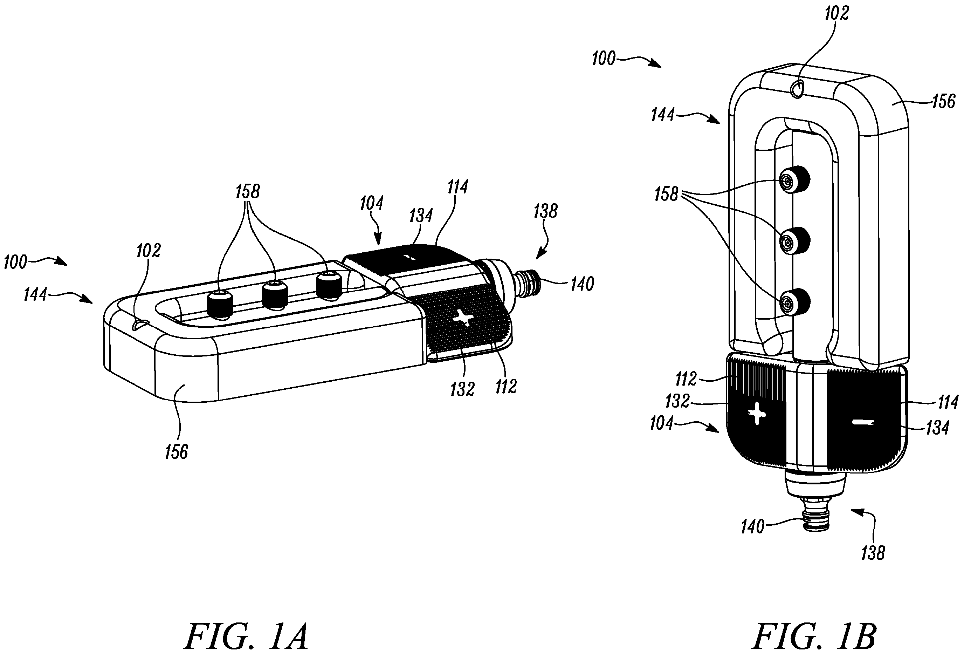

**FIG. 1A** shows a watering device **100.** The watering device **100** may be used to supply water in a bathroom, a wash basin, a drinking fountain, a shower stall, a garden, and the like. The watering device **100** is installed on one or more of a ground surface (not shown), a wall (not shown), and a tree (not shown), or any other installation as used or known in the art. As shown in **FIG. 1A****,** the watering device **100** in a first position, and is disposed on the ground surface, or any other flat/horizontal surface. The watering device **100** defines an integrated fastening means **102** for horizontal fastening of the watering device **100.** Further, the watering device **100** may include a number of ground spikes (not shown) in a fold-out manner to secure the watering device **100** on the ground surface. **FIG. 1B** shows the watering device **100** in a second position. In the second position, the watering device **100** may be disposed on the wall, the tree, and the like. The watering device **100** also defines the integrated fastening means **102** for vertical mounting of the watering device **100.** The watering device **100** may additionally and optionally include a bracket (not shown) for vertical mounting of the watering device **100.**

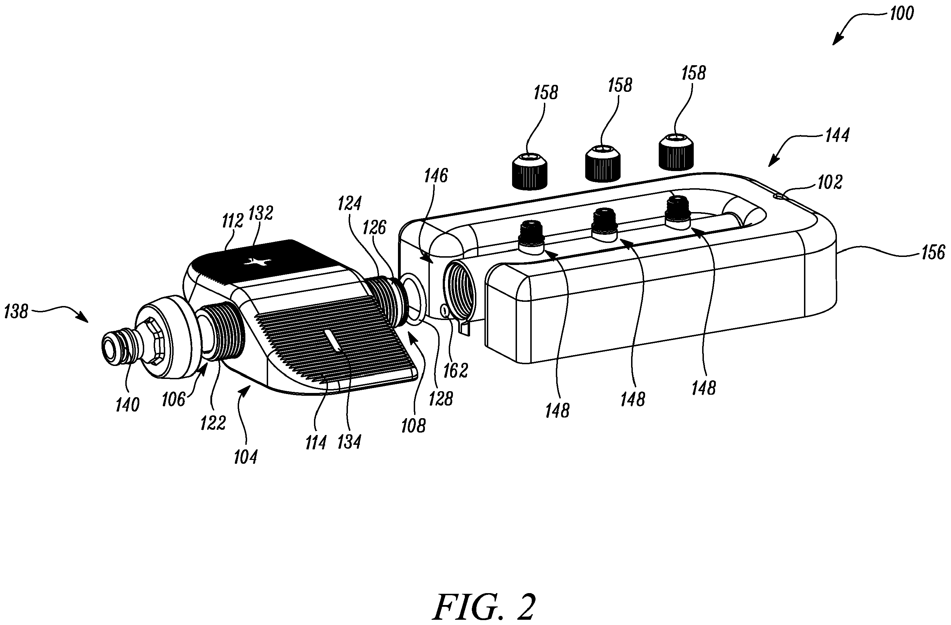

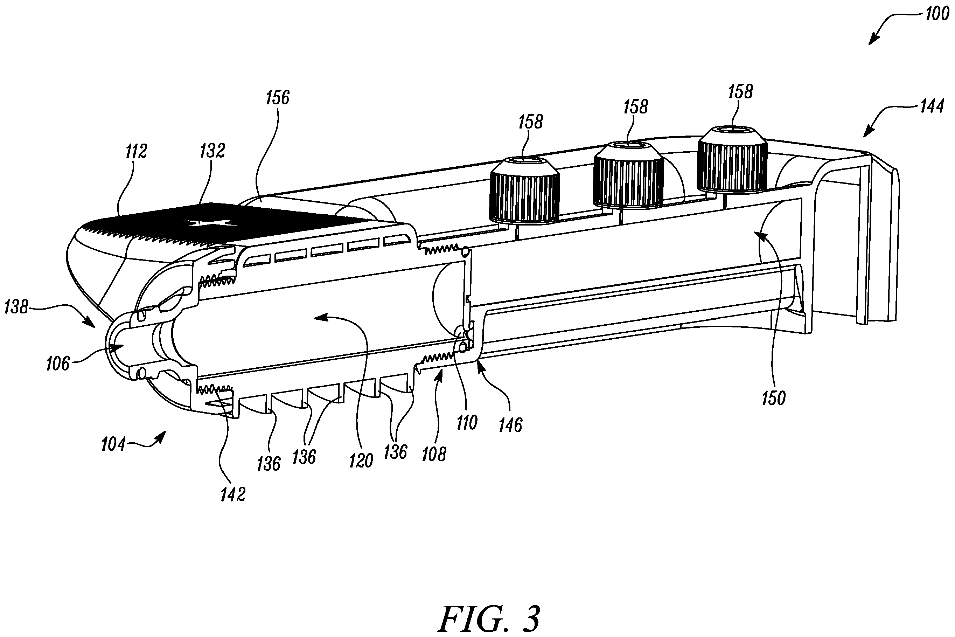

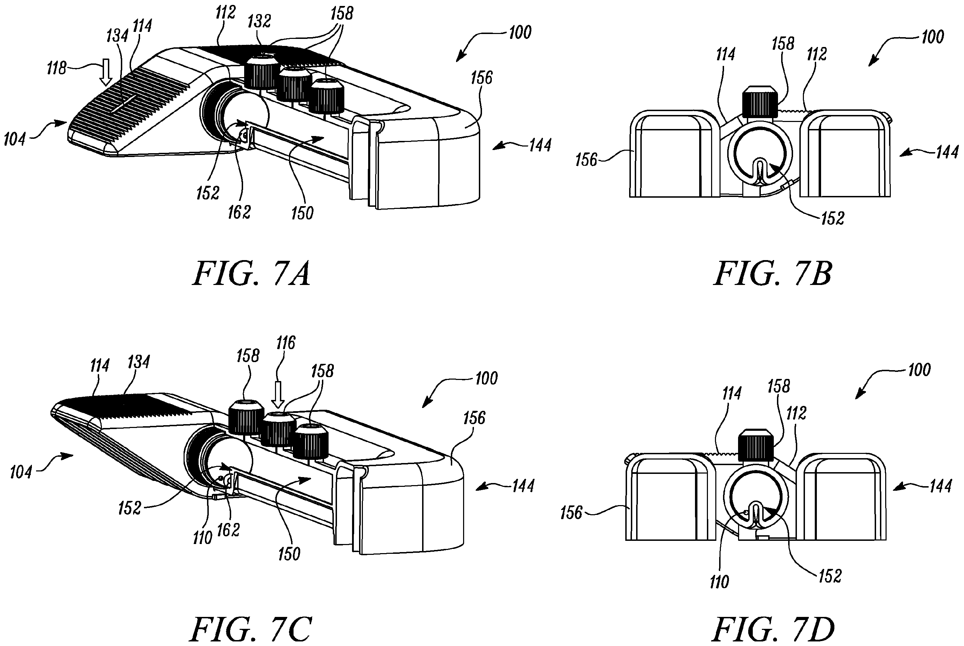

Referring to **FIG. 2** and **FIG. 3****,** the watering device **100** includes a watering controller **104.** The watering controller **104** has a controller inlet **106** and a controller outlet **108.** The watering controller **104** is actuated by a user action such as a push, touch and the like. The watering device **100** is such that the controller outlet **108** defines an opening **110.** The opening **110** allows flow of water from the controller inlet **106** to exit through the controller outlet **108.** The watering controller **104** has a rocker arm shape having a first portion **112** and a second portion **114.** Further, a first user action **116** (as shown in **FIG. 7C**) acts on the first portion **112** and a second user action **118** (as shown in **FIG. 7A**) acts on the second portion **114.**

In some embodiments, the watering controller **104** includes the first portion **112** to activate the watering controller **104,** and the second portion **114** to deactivate the watering controller **104** and acting on the first portion **112.** The first portion **112** is a foot pedal. The present disclosure provides that the second portion **112** is a foot pedal. This allows actuation of the watering controller **104** by the first user action **116** and a second user action **118** acting on the first portion **112,** and the second portion **114.** Further, the second portion **112** of the present disclosure being a foot pedal, provides benefits and advantages over conventional watering device. The conventional watering device may include elastic members (say springs, coils and the like) for any of the first portion, and the section portion to restore such watering device, based on presence or absence of user actions.

In some embodiments, the first portion **112** and the second portion **114** are in different planes. This arrangement of the first portion **112** and the second portion **114** provides the rocker arm shape to the watering controller **104.** Further, this shape allows easy and efficient operation of the watering controller **104,** when the first user action **116** acts on the first portion **112,** and the second user action **118** acts on the second portion **114.** The present disclosure provides the watering controller **104** having the first portion **112** and the second portion **114** in different planes to provide "the rocker arm shape", however the actual implementation may have the first portion **112** and the second portion **114** in any plane, arrangement, shape such as to allow ease of actuation of the watering controller **104,** based on the first user action **116,** and the second user action **118** on acts on the first portion **112** and the second portion **114,** respectively.

In some embodiments, one or more of the first portion **112** and the second portion **114** may be generally straight or horizontal in profile. Further, at least some portion of the first portion **112** and the second portion **114** may have wings or protrusions at ends thereof. Such wings or protrusions of the first portion **112** and the second portion **114** may then allow ease of engagement or actuation of the watering controller **104,** based on the first user action **116,** and the second user action **118.**

Further, the controller inlet **106** is attached with a hose connector **138** (as shown in **FIG. 2** and **FIG. 3**) or any other water source (not shown). The hose connector **138** includes a cylindrical body with an inlet projection **140.** The hose connector **138** defines an internal thread section **142** to removably coupled the hose connector **138** with the controller inlet **106** of the watering controller **104.** Further, the inlet projection **140** is inserted into a hose pipe (not shown). The hose pipe may supply water from the water source (not shown), such as a tap, a pump, and the like.

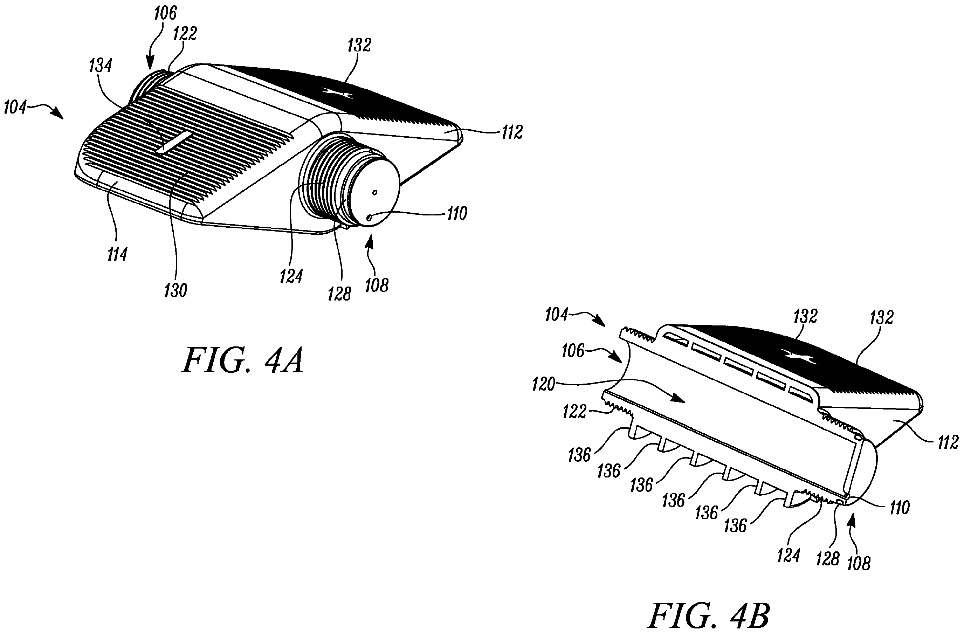

As shown in **FIG. 4A****,** the watering controller **104** includes a parallelogram cross-section. The watering controller **104** may be manufactured using a plastic, a metal, a wood, and the like. The watering controller **104** also includes a controller channel **120** (as shown in **FIG. 4B**) disposed centrally between the first portion **112** and the second portion **114** of the watering controller **104.** The controller channel **120** is fluidly coupled to the controller inlet **106** and the controller outlet **108.** The controller inlet **106** defines a first threaded portion **122,** and the controller outlet **108** defines a second threaded portion **124.** The controller outlet **108** also defines a groove **126** (shown in **FIG. 2**) in which a first sealing **128** is disposed therein.

Further, the first portion **112** and the second portion **114** of the watering controller **104** includes a number of ridges **130.** The ridges **130** prevents slipping of foot or hand of the user during the first user action **116** or the second user action **118.** The first portion **112** and the second portion **114** of the watering controller **104** also includes a first indicator **132** and a second indicator **134,** respectively. The first indicator **132** and the second indicator **134** indicates which portion a user should use to allow or restrict the water flow. As shown in **FIG. 4B****,** the watering controller **104** further includes a number of ribs **136** disposed opposite to the ridges **130.** The ribs **136** may provide strength and rigidity to the watering controller **104,** such as during installation in the first position and the second position.

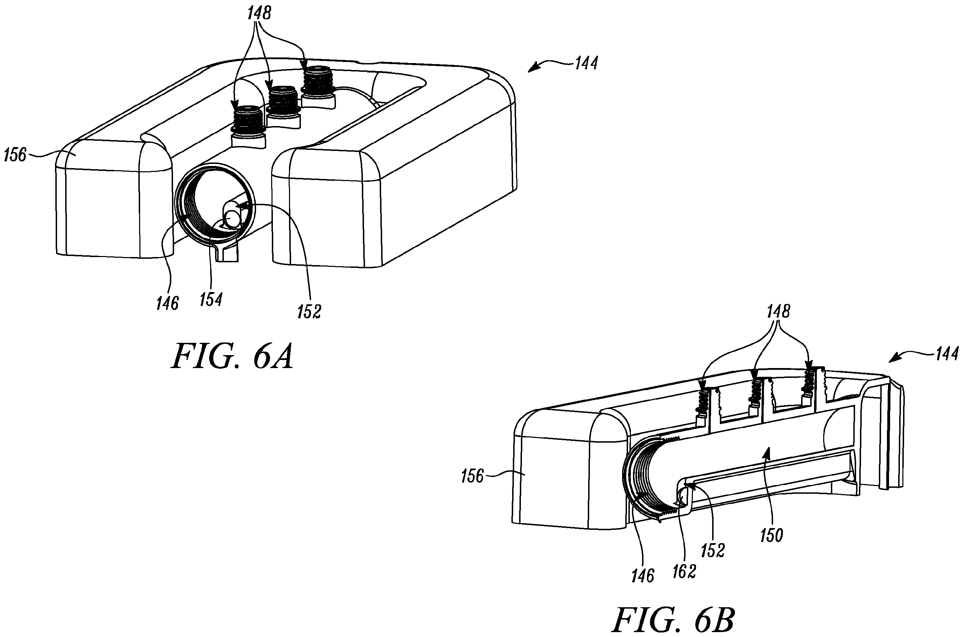

Referring to **FIGS. 2****,** **3** along with and **FIG. 6A, 6B****,** the watering device **100** also includes a housing **144** having a housing inlet **146** and one or more housing outlets **148.** The housing inlet **146** and the one or more housing outlets **148** are fluidly coupled to define a water channel **150.** The watering device **100** is such that the water channel **150** defines a nose portion **152** (shown in **FIG. 6B**). The nose portion **152** selectively engages with the opening **110** on assembly of the housing inlet **146** of the housing **144** with the controller outlet **108** of the watering controller **104.** The nose portion **152** is a cylindrical projecting part which is disposed proximate the housing inlet **146.** The nose portion **152** defines a sealing seat **154** therein. It is understood, that also this embodiment the nose portion **152** is an integral part of the water channel **150** it also could form a separate part that is attached or joint with the water channel **150** during the manufacturing process.

In the depicted embodiment the housing **144** defines a generally rectangular shape. It is well understood that the housing 144 could define any shape at all dependent on the use of the tool and convenient to a user. The housing **144** may be manufactured using a plastic, a metal, or any other material without limiting the scope of the present disclosure. The housing **144** also defines a housing body **156.** The water channel **150** is disposed centrally, such that the housing body **156** surrounds the water channel **150.** Further, the housing outlets **148** are disposed on or above the water channel **150.** In the illustrated example, the housing **144** includes three housing outlets **148.** In other examples, the housing **144** may include any number, type, arrangement of housing outlets **148** without limiting the scope of the present disclosure. The one or more housing outlets **148** include attachments **158** (as shown in **FIG. 2** and **FIG. 3**). In some embodiments, the attachments **158** may include one or more of a sprinkler, and a sprayer.

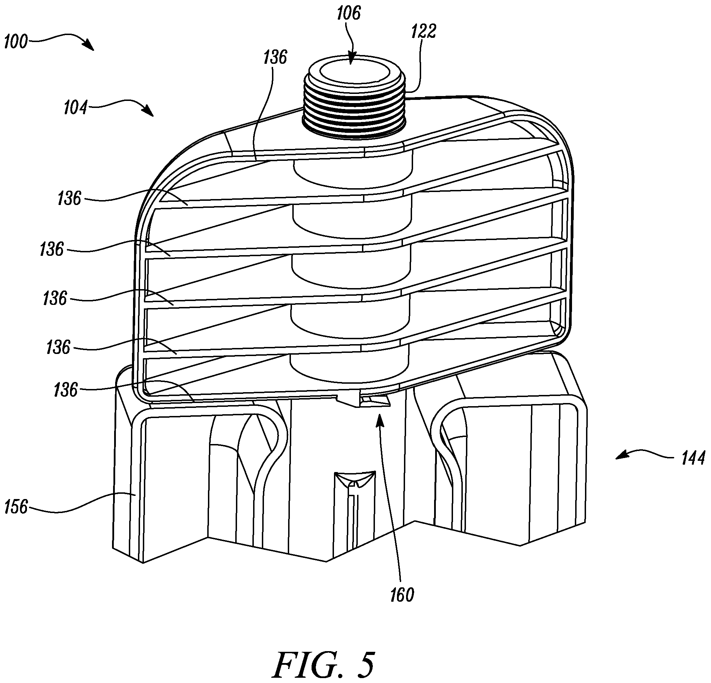

In some embodiments, the housing inlet **146** and the controller outlet **108** are assembled as shown with the figures by a screw joint. It is understood that any other mating structure can alternatively or additionally be used, such as for example a snap-fit connection. In particular with the use of a snap-fit connection this one could include an integrated end stop **160** (shown in **FIG. 5**) to prevent disassembly of the watering controller **104** with the housing **144.** Further, assembly of the housing inlet **146** of the housing **144** with the controller outlet **108** of the watering controller **104** includes one or more sealings **128, 162** (shown in **FIG. 2**) between the housing inlet **146** and the controller outlet **108.** The assembly includes the first sealing **128** and the second sealing **162.** The first sealing **128** is greater in diameter than the second sealing **162.** The first sealing **128** is disposed in the groove **126** of the controller outlet **108** to seal the water channel **150** properly. Further, the second sealing **162** is disposed in the sealing seat **154** of the nose portion **152** to seal the opening **110** properly. The first sealing **128** and the second sealing **162** may restrict leakage of water and allow desired coupling between during assembly.

**FIGS. 7A** to **7D** illustrate role of the first user action **116** and the second user action **118** to actuate the watering controller **104.** The present figures will discuss the working of the watering device **100,** with focus on engagement and disengagement of the opening **110** of the watering controller **104** with/from the nose portion **152** of the housing **144.**

The second user action **118,** as shown in **FIG. 7A** and **FIG. 7B****,** with the watering controller **104** engages the opening **110** of the watering controller **104** from the nose portion **152** of the housing **144.** This engagement of the opening **110** and the nose portion **152** is such that to disallow the water to flow from the watering controller **104** to the one or more housing outlets **148.** In particular, the opening **110** of the watering controller **104** is substantially or fully covered by the nose portion **152** of the housing **144** as shown in **FIG. 7B****,** leading to inability of the water to flow. As illustrated in the present figure, the opening **110** of the watering controller **104** is covered by the nose portion **152,** and not visible herein. In some embodiments, the nose portion **152** of the housing **144** may be a whole channel or longitudinal element within the water channel **150.** Additionally, or alternatively, the nose portion **152** of the housing **144** may be a protrusion or any male element within the water channel **150,** such as to partially or fully engage the opening **110** of the watering controller **104.**

As shown in **FIG. 7C** and **FIG. 7D****,** the first user action **116** with the watering controller **104** at least partially disengages the opening **110** of the watering controller **104** from the nose portion **152** of the housing **144.** This disengagement of the opening **110** and the nose portion **152** is such that to allow the water to flow from the watering controller **104** to the one or more housing outlets **148.** In particular, the opening **110** of the watering controller **104** is partially or fully open from the nose portion **152** of the housing **144** as shown in **FIG. 7D****,** leading to the flow of the water. As illustrated in the present figure, the opening **110** of the watering controller **104** is at least partially visible, as the opening **110** is disengaged from the nose portion **152.**

Furthermore, one or more of the first user action **116** and the second user action **118** to actuate the watering controller **104** may include one or more of actuation by a user hand, and a user foot. In particular, the actuation of the watering controller **104** by the user foot may take place during installation of the watering device **100** in the first position (i.e., substantially horizontal), as shown in **FIG. 1A****.** Further, the actuation of the watering controller **104** by the user hand may take place during installation of the watering device **100** in the second position (i.e., substantially vertical), as shown in **FIG. 1B****.**

In some embodiments, the present disclosure illustrates a single opening **110** of the watering controller **104** and the nose portion **152** of the housing **144,** however actual implementation of the present disclosure may have multiple opening(s) **110** of the watering controller **104** and one or more nose portion(s) **152** of the housing **144,** to obtain different follow rates, modes, liquid volume and the like. In some embodiments, some of the opening(s) **110** of the watering controller **104** may be partially or fully closed/shut off by the one or more nose portion(s) **152** of the housing **144** and all such variations are well within the present disclosure.

In some embodiments, the first user action **116** and the second user action **118** lead to movement of the watering controller **104,** while the housing **144** generally remains in place and is substantially stable. This movement of the watering controller **104** leads to engagement or disengagement of the opening **110** of the watering controller **104** from the nose portion **152** of the housing **144,** as illustrated in **FIGS. 7A** to **7D****.** Further, the present disclosure illustrates exemplary opening **110** and the nose portion **152** while the size, dimension, position, type of any of the opening **110** of the watering controller **104,** and the nose portion **152** of the housing **144** may vary as per actual implementation, or any other factor related to the watering device **100.** Further, actual implementation of the present disclosure may have the opening **110** of the watering controller **104** in accordance with the nose portion **152** of the housing **144,** such as to have desired engagement or disengagement of the opening **110** and the nose portion **152,**or based on any other factors or implementation preferences.

The present disclosure provides the improved watering device **100** to supply water for various applications. The housing **144** of the watering device **100** allows removal coupling with the watering controller **104.** The watering device **100** may be disposed on the ground surface or may be hanged on the wall or the tree. This feature provides great flexibility to use watering device **100** in different applications. Further, the watering controller **104** may be operated by the user foot or the user hand. Further, the rocker arm shape of the watering controller **104** allows simple, convenient and stepless opening and closing operation. Furthermore, the housing **144** and the watering controller **104** form a valve when assembled. This valve remains in a set position during operation. Moreover, the housing **144,** the watering controller **104,** are positioned on substantially the same level which prevents the tilting, undue vibrations of the housing **144** during application of the first user action **116** or the second user action **118.**

In the drawings and specification, there have been disclosed preferred embodiments and examples of the disclosure and, although specific terms are employed, they are used in a generic and descriptive sense only and not for the purpose of limitation of the scope of the disclosure being set forth in the following claims.

### LIST OF ELEMENTS

- **100**: Watering Device
- **102**: Integrated Fastening Means
- **104**: Watering Controller
- **106**: Controller Inlet
- **108**: Controller Outlet
- **110**: Opening
- **112**: First Portion
- **114**: Second Portion
- **116**: First User Action
- **118**: Second User Action
- **120**: Controller Channel
- **122**: First Threaded Portion
- **124**: Second Threaded Portion
- **126**: Groove
- **128**: First sealing
- **130**: Ridges
- **132**: First indicator
- **134**: Second indicator
- **136**: Ribs
- **138**: Hose Connector
- **140**: Inlet Projection
- **142**: Internal Thread Section
- **144**: Housing
- **146**: Housing Inlet
- **148**: Housing Outlet
- **150**: Water Channel
- **152**: Nose Portion
- **154**: Sealing Seat
- **156**: Housing body
- **158**: Attachments
- **160**: End Stop
- **162**: Second sealing

## Claims

1. A watering device (**100**) comprising:
a watering controller (**104**) having a controller inlet (**106**) and a controller outlet (**108**), wherein the watering controller (**104**) is adapted to be actuated by a user action,
wherein the watering controller (**104**) includes a first portion (**112**) to activate the watering controller (**104**), and a second portion (**114**) to deactivate the watering controller (**104**) and acting on the first portion (**112**), wherein the first portion (**112**) is a foot pedal; and
a housing (**144**) having a housing inlet (**146**) and one or more housing outlets (**148**), wherein the housing inlet (**146**) and the one or more housing outlets (**148**) are fluidly coupled to define a water channel (**150**);
wherein
the second portion (**114**) is a foot pedal,
the controller outlet (**108**) defines an opening (**110**), wherein the opening (**110**) allows flow of water from the controller inlet (**106**) to exit through the controller outlet (**108**); and
the water channel (**150**) defines a nose portion (**152**), wherein the nose portion (**152**) selectively engages with the opening (**110**) on assembly of the housing inlet (**146**) of the housing (**144**) with the controller outlet (**108**) of the watering controller (**104**),
wherein a first user action (**116**) with the watering controller (**104**) at least partially disengages the opening (**110**) of the watering controller (**104**) from the nose portion (**152**) of the housing (**144**) such that to allow the water to flow from the watering controller (**104**) to the one or more housing outlets (**148**).

2. The watering device (**100**) of claim 1, wherein a second user action (**118**) with the watering controller (**104**) engages the opening (**110**) of the watering controller (**104**) from the nose portion (**152**) of the housing (**144**) such that to disallow the water to flow from the watering controller (**104**) to the one or more housing outlets (**148**).

3. The watering device (**100**) of claims 1 and 2, wherein the watering controller (**104**) has a rocker arm shape having the first portion (**112**) and the second portion (**114**), wherein the first user action (**116**) acts on the first portion (**112**) and the second user action (**118**) acts on the second portion (**114**).

4. The watering device (**100**) of claim 1, wherein the one or more housing outlets (**148**) include attachments (**158**) which include one or more of a sprinkler, and a sprayer.

5. The watering device (100) of claim 1, wherein the controller inlet (**106**) is adapted to attach with a hose connector (**138**) or a water source.

6. The watering device (**100**) of claim 1, wherein assembly of the housing inlet (**146**) of the housing (**144**) with the controller outlet (**108**) of the watering controller (**104**) includes one or more sealings (**128**), (**162**) between the housing inlet (**146**) and the controller outlet (**108**).

7. The watering device (**100**) of claim 1, wherein the housing inlet (**146**) and the controller outlet (**108**) are assembled by a snap-fit connection or a screw joint.

8. The watering device (**100**) of claim 1, wherein the watering device (**100**) is installed on one or more of a ground surface, a wall, and a tree.

9. The watering device (**100**) of claims 1, and 2, wherein one or more of the first user action (**116**) and the second user action (**118**) to actuate the watering controller (**104**) include one or more of actuation by a user hand, and a user foot.

10. The watering device (**100**) of claim 1, wherein the first portion (**112**), and the second portion (**114**) are in different planes.

## Patentansprüche

1. Eine Bewässerungsvorrichtung (100), die Folgendes umfasst:
eine Bewässerungssteuerung (104) mit einem Steuerungseinlass (106) und einem Steuerungsauslass (108), wobei die Bewässerungssteuerung (104) so eingerichtet ist, dass sie durch eine Benutzeraktion betätigt werden kann,
wobei die Bewässerungssteuerung (104) einen ersten Bereich (112) zum Aktivieren der Bewässerungssteuerung (104) und einen zweiten Bereich (114) zum Deaktivieren der Bewässerungssteuerung (104) aufweist, der auf den ersten Bereich (112) wirkt, wobei der erste Bereich (112) ein Fußpedal ist; und
ein Gehäuse (144) mit einem Gehäuseeinlass (146) und einem oder mehreren Gehäuseauslässen (148), wobei der Gehäuseeinlass (146) und der eine oder die mehreren Gehäuseauslässe (148) strömungsmäßig gekoppelt sind, um einen Wasserkanal (150) zu bilden; wobei
der zweite Bereich (114) ein Fußpedal ist,
der Steuerungsauslass (108) eine Öffnung (110) definiert,
wobei die Öffnung (110) es ermöglicht, dass der Wasserfluss vom Steuerungseinlass (106) durch den Steuerungsauslass (108) austritt; und
der Wasserkanal (150) einen Nasenabschnitt (152) definiert, wobei der Nasenabschnitt (152) beim Zusammenbau des Gehäuseeinlasses (146) des Gehäuses (144) mit dem Steuerungsauslass (108) der Bewässerungssteuerung (104) selektiv mit der Öffnung (110) in Eingriff kommt,
wobei eine erste Benutzeraktion (116) mit der Bewässerungssteuerung (104) zumindest teilweise die Öffnung (110) der Bewässerungssteuerung (104) von dem Nasenabschnitt (152) des Gehäuses (144) löst, so dass das Wasser von der Bewässerungssteuerung (104) zu dem einen oder den mehreren Gehäuseauslässen (148) fließen kann.

2. Die Bewässerungsvorrichtung (100) nach Anspruch 1, wobei eine zweite Benutzeraktion (118) mit der Bewässerungssteuerung (104) die Öffnung (110) der Bewässerungssteuerung (104) mit dem Nasenteil (152) des Gehäuses (144) in Eingriff bringt, so dass das Wasser nicht von der Bewässerungssteuerung (104) zu dem einen oder den mehreren Gehäuseauslässen (148) fließen kann.

3. Die Bewässerungsvorrichtung (100) nach Anspruch 1 und 2, wobei die Bewässerungssteuerung (104) eine Kipphebelform mit dem ersten Bereich (112) und dem zweiten Bereich (114) aufweist, wobei die erste Benutzeraktion (116) auf den ersten Bereich (112) und die zweite Benutzeraktion (118) auf den zweiten Bereich (114) wirkt.

4. Die Bewässerungsvorrichtung (100) nach Anspruch 1, wobei der eine oder die mehreren Gehäuseauslässe (148) Anbaugeräte (158) umfassen, die einen oder mehrere von einem Sprinkler und einem Zerstäuber umfassen.

5. Die Bewässerungsvorrichtung (100) nach Anspruch 1, wobei der Steuerungseinlass (106) so ausgelegt ist, dass er mit einem Schlauchanschluss (138) oder einer Wasserquelle verbunden werden kann.

6. Die Bewässerungsvorrichtung (100) nach Anspruch 1, wobei eine Montage des Gehäuseeinlasses (146) des Gehäuses (144) mit dem Steuerungsauslass (108) der Bewässerungssteuerung (104) eine oder mehrere Dichtungen (128), (162) zwischen dem Gehäuseeinlass (146) und dem Steuerungsauslass (108) umfasst.

7. Die Bewässerungsvorrichtung (100) nach Anspruch 1, wobei der Gehäuseeinlass (146) und der Steuerungsauslass (108) durch eine Schnappverbindung oder eine Schraubverbindung zusammengefügt sind.

8. Die Bewässerungsvorrichtung (100) nach Anspruch 1, wobei die Bewässerungsvorrichtung (100) an einer oder mehreren von einer Bodenoberfläche, einer Wand und einem Baum installiert ist.

9. Die Bewässerungsvorrichtung (100) nach Anspruch 1 und 2, wobei eine oder mehrere der ersten Benutzeraktion (116) und der zweiten Benutzeraktion (118) zur Betätigung der Bewässerungssteuerung (104) eine oder mehrere Betätigungen durch eine Benutzerhand und einen Benutzerfuß umfassen.

10. Die Bewässerungsvorrichtung (100) nach Anspruch 1, wobei der erste Bereich (112) und der zweite Bereich (114) in unterschiedlichen Ebenen liegen.

## Revendications

1. Dispositif d'arrosage (100) comprenant :
un contrôleur d'arrosage (104) ayant une entrée de contrôleur (106) et une sortie de contrôleur (108), dans lequel le contrôleur d'arrosage (104) est adapté pour être actionné par une action d'utilisateur,
dans lequel le contrôleur d'arrosage (104) comprend une première partie (112) pour activer le contrôleur d'arrosage (104), et une seconde partie (114) pour désactiver le contrôleur d'arrosage (104) et agir sur la première partie (112), dans lequel la première partie (112) est une pédale ; et
un boîtier (144) comportant une entrée de boîtier (146) et une ou plusieurs sorties de boîtier (148), dans lequel l'entrée de boîtier (146) et les une ou plusieurs sorties de boîtier (148) sont couplées de manière fluidique pour définir un canal d'eau (150) ;
dans lequel
la deuxième partie (114) est une pédale,
la sortie de contrôleur (108) définit une ouverture (110), dans lequel l'ouverture (110) permet au flux d'eau provenant de l'entrée de contrôleur (106) de sortir par la sortie de contrôleur (108) ; et
le canal d'eau (150) définit une partie de nez (152), dans lequel la partie de nez (152) s'engage sélectivement dans l'ouverture (110) lors de l'assemblage de l'entrée de boîtier (146) du boîtier (144) avec la sortie de contrôleur (108) du contrôleur d'arrosage (104),
dans lequel une première action d'utilisateur (116) avec le contrôleur d'arrosage (104) désengage au moins partiellement l'ouverture (110) du contrôleur d'arrosage (104) de la partie de nez (152) du boîtier (144) de manière à permettre à l'eau de s'écouler du contrôleur d'arrosage (104) vers les une ou plusieurs sorties de boîtier (148).

2. Dispositif d'arrosage (100) selon la revendication 1, dans lequel une seconde action d'utilisateur (118) avec le contrôleur d'arrosage (104) engage l'ouverture (110) du contrôleur d'arrosage (104) à partir de la partie du nez (152) du boîtier (144) de manière à empêcher l'eau de s'écouler du contrôleur d'arrosage (104) vers les une ou plusieurs sorties de boîtier (148).

3. Dispositif d'arrosage (100) selon les revendications 1 et 2, dans lequel le contrôleur d'arrosage (104) a une forme de bras oscillant avec la première partie (112) et la seconde partie (114), dans lequel la première action d'utilisateur (116) agit sur la première partie (112) et la seconde action d'utilisateur (118) agit sur la seconde partie (114).

4. Dispositif d'arrosage (100) selon la revendication 1, dans lequel les une ou plusieurs sorties de boîtier (148) comprennent des accessoires (158) qui comprennent un ou plusieurs parmi un arroseur et un pulvérisateur.

5. Dispositif d'arrosage (100) selon la revendication 1, dans lequel l'entrée de contrôleur (106) est adaptée pour se fixer à un connecteur de tuyau (138) ou à une source d'eau.

6. Dispositif d'arrosage (100) selon la revendication 1, dans lequel l'assemblage de l'entrée de boîtier (146) du boîtier (144) avec la sortie de contrôleur (108) du contrôleur d'arrosage (104) comprend un ou plusieurs joints d'étanchéité (128), (162) entre l'entrée de boîtier (146) et la sortie de contrôleur (108).

7. Dispositif d'arrosage (100) selon la revendication 1, dans lequel l'entrée de boîtier (146) et la sortie de contrôleur (108) sont assemblées par un raccord à encliquetage ou un joint vissé.

8. Dispositif d'arrosage (100) selon la revendication 1, dans lequel le dispositif d'arrosage (100) est installé sur une ou plusieurs parmi une surface au sol, un mur et un arbre.

9. Dispositif d'arrosage (100) selon les revendications 1 et 2, dans lequel une ou plusieurs de la première action d'utilisateur (116) et de la seconde action d'utilisateur (118) pour actionner le contrôleur d'arrosage (104) comprennent une ou plusieurs actions d'une main de l'utilisateur et d'un pied de l'utilisateur.

10. Dispositif d'arrosage (100) selon la revendication 1, dans lequel la première partie (112) et la seconde partie (114) sont dans des plans différents.
